# DEMANDE DE BREVET EUROPEEN

(11) **EP 3 543 598 A1**
(43) Date de publication de la demande: **25.09.2019**
(21) Numéro de dépôt: 19160733.2
(22) Date de dépôt: 05.03.2019
(51) Int. Cl.: F21S 43/27, F21S 43/237, F21S 43/239, F21S 43/243, F21S 43/247, F21S 43/14, F21S 43/20, F21S 43/50, F21V 8/00

(54) **AGENCEMENT POUR VEHICULE AUTOMOBILE COMPRENANT UN ELEMENT DE CARROSSERIE ET UN DISPOSITIF D'ECLAIRAGE ET/OU DE SIGNALISATION DU TYPE GUIDE DE LUMIÈRE IMPLANTÉ DANS LEDIT ELEMENT DE CARROSSERIE**

(30) Priorité: 20.03.2018 FR 1852382
(71) Demandeur: PSA Automobiles SA, 78300 Poissy (FR)
(72) Inventeur: POILANE, Philippe, 92160 ANTONY (FR); LARRIBEAU, Nathalie, 78310 MAUREPAS (FR); DOAN, Jean Francois, 78300 POISSY (FR); MAZEROLLE, Pierre, 91370 VERRIERES LE BUISSON (FR)

(57) **Abrégé**

Agencement pour véhicule automobile comprenant un élément de carrosserie (30) comportant au moins une ouverture (31) et au moins un dispositif d'éclairage et/ou de signalisation (71) implanté dans ladite ouverture (31), ledit dispositif d'éclairage et/ou de signalisation (71) comprenant au moins une source de lumière (10) et un guide de lumière (11), ladite source de lumière étant couplée optiquement au guide de lumière (11), caractérisé en ce que ledit guide de lumière (11) comprend une première partie d'extrémité (13) supportant au moins une face d'entrée (12) recevant la lumière générée par la source de lumière (10) et une deuxième partie d'extrémité (15), distante de la première partie d'extrémité (13), supportant au moins une face de sortie (14) de la lumière correspondant à la totalité de la face d'illumination du dispositif d'éclairage et/ou de signalisation (71), ladite deuxième partie d'extrémité (15) du guide (11) étant comprise dans l'ouverture (31) de l'élément de carrosserie (30), et en ce que ledit dispositif d'éclairage et/ou de signalisation (71) comprend un boitier (20) rapporté de manière étanche sur la première partie d'extrémité (13) du guide de lumière (11) en encapsulant la source de lumière (10) et la face d'entrée de lumière (12) .

## Description

L'invention concerne un agencement pour véhicule automobile comprenant un élément de carrosserie et au moins un dispositif d'éclairage et/ou de signalisation implanté dans ledit élément de carrosserie.

Pour répondre à certaines exigences en termes de réglementation photométrique, la face avant des véhicules de type automobile est équipée de feux diurnes également connus sous l'acronyme anglais DRL pour « Day time Running Lamp ». Ces feux diurnes sont constamment allumés dès lors que les feux de route ou les feux de croisement ne le sont pas.

Ces feux doivent répondre à des normes réglementaires, par exemple relatives à leur surface minimale d'éclairage. Ces feux sont devenus une signature lumineuse des véhicules et sont à ce titre soumis à des contraintes de design et d'esthétique. Un exemple d'un tel dispositif est donné par le document DE 20 2009 002 518.

Les feux diurnes sont souvent de taille relativement restreinte et peuvent être associés aux projecteurs avant. Ils peuvent également en être détachés et être alors implantés au niveau du pare-chocs qui présentera une ouverture de petite taille à cet effet. Malheureusement le fait de devoir pratiquer une ouverture dans le pare-chocs va limiter la taille des DRL qu'il est possible d'implanter.

Il en est de même pour d'autres dispositifs de signalisation comme des feux indicateurs de direction (clignotant) qui comme les feux diurnes peuvent être implantés dans un élément de carrosserie ainsi que pour certains types de dispositifs d'éclairage qui peuvent être implantés dans des échancrures ménagées dans un élément de carrosserie.

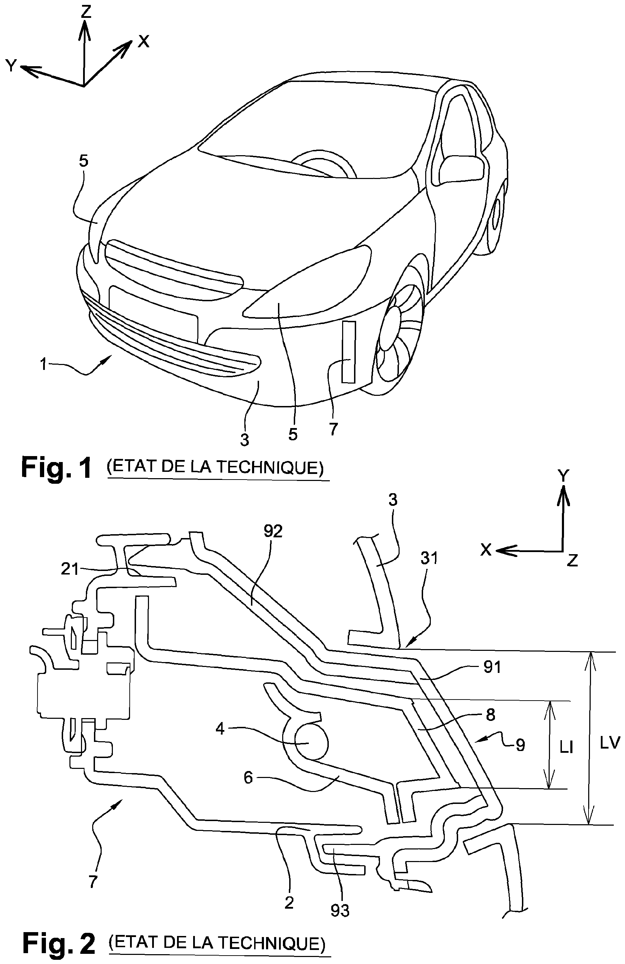

La figure 1 illustre un véhicule automobile 1 de type connu, vu depuis sa face avant. Ce véhicule 1 comprend un pare-chocs avec une peau de pare-chocs 3 et des blocs optiques 5. Ce véhicule 1 comprend également un dispositif 7 de signalisation par exemple de type DRL, et est orienté dans l'exemple décrit, sensiblement verticalement. Le dispositif 7 est ici situé à l'avant du véhicule 1, mais pourrait tout aussi bien être situé à l'arrière de ce véhicule.

De manière habituelle, et tel qu'illustré à la figure 2, le dispositif de signalisation 7 est constitué d'un boitier 2 dans lequel est disposé un ensemble d'éléments optiques dont un guide de lumière 4 couplé à au moins une source de lumière non représentée (par exemple une LED). Le guide de lumière 4 conduit et diffuse la lumière émise par la LED. Il s'appuie sur un réflecteur 6 de manière à réfléchir la lumière diffusée par le guide de lumière 4 vers un écran 8 disposé en regard du réflecteur 6 et du guide de lumière 4. La face ouverte du boitier 2 est fermée par une glace (ou vitre) 9 comportant une couche transparente à la lumière 91 et une couche opaque à la lumière 92. Une telle glace est également désignée par glace « bi-injection ».

La glace 9 est fixée sur le boitier 2 de manière étanche pour protéger les éléments optiques contenus dans le boitier 2 vis-à-vis de l'eau et de la poussière. A cet effet, le boitier 2 est pourvu d'une gorge de collage 21 sur son bord extérieur périphérique, gorge 21 qui reçoit le bord périphérique 93 de la glace 9 et la colle qui assure à la fois la fixation de la glace 5 sur le boitier 2 et l'étanchéité du boitier 2.

La partie visible de la glace 9 (pour un observateur situé à l'extérieur du véhicule 1) s'étend sur une largeur LV (selon Y) correspondant à l'ouverture 31 ménagée dans l'élément de carrosserie 3.

L'encombrement présenté en X par l'assemblage et l'empilage avec jeu des épaisseurs des éléments optiques et de la glace 9 fermant le boitier 2, est un paramètre dimensionnel contraignant à prendre en compte pour l'implantation du boitier 2 dans un élément de carrosserie 3 du véhicule 1 et impacte notamment le style du véhicule 1.

D'autre part, ce dispositif encombrant ne permet pas d'illuminer toute la largeur visible LV du dispositif de signalisation : la largeur d'illumination LI restant très inférieure à la largeur visible LV.

L'invention a donc notamment pour but d'améliorer la situation en proposant une solution où l'encombrement du dispositif est réduit aussi bien en arrière de l'élément de carrosserie, dans lequel vient se loger le dispositif de signalisation, qu'en largeur visible illuminée telle que perçue par un observateur situé à l'extérieur du véhicule.

Elle permet également une réduction des masses et donc une économie tant en coût matière qu'en terme de consommation.

Elle propose notamment à cet effet un agencement pour véhicule automobile comprenant un élément de carrosserie comportant au moins une ouverture et au moins un dispositif d'éclairage et/ou de signalisation implanté dans ladite ouverture, ledit dispositif d'éclairage comprenant au moins une source de lumière et un guide de lumière, ladite source de lumière étant couplée optiquement au guide de lumière, caractérisé en ce que ledit guide de lumière comprend une première partie d'extrémité supportant au moins une face d'entrée recevant la lumière générée par la source de lumière et une deuxième partie d'extrémité, distante de la première partie d'extrémité, supportant au moins une face de sortie de la lumière correspondant à la totalité de la surface d'illumination du dispositif d'éclairage et/ou de signalisation, ladite deuxième partie d'extrémité du guide étant comprise dans l'ouverture de l'élément de carrosserie, et en ce que ledit dispositif comprend un boitier rapporté de manière étanche sur la première partie d'extrémité du guide de lumière en encapsulant la source de lumière et la face d'entrée de lumière.

Selon une caractéristique, les dimensions de l'ouverture ménagée dans l'élément de carrosserie correspondent, au jeu près, aux dimensions de la face de sortie de la deuxième partie d'extrémité du guide de lumière ; la surface d'illumination de la face de sortie de lumière correspondant à la surface visible du dispositif d'éclairage et/ou de signalisation.

Selon une autre caractéristique, le boitier comporte un corps creux rapporté de manière étanche sur la première partie d'extrémité du guide de lumière supportant la face d'entrée de lumière.

Selon une autre caractéristique, le guide de lumière est de type plat.

Selon une autre caractéristique, le boitier comporte en outre un couvercle rapporté de manière étanche sur le côté du guide de lumière qui est opposé au côté du guide supportant la face d'entrée de lumière, en regard du corps creux.

Selon une autre caractéristique, le corps creux et le couvercle sont fixés l'un à l'autre en prenant en sandwich le première partie d'extrémité du guide plat.

Selon une autre caractéristique, un joint d'étanchéité est inséré entre les parties du corps creux et du couvercle qui sont respectivement en contact avec les côtés du guide plat.

Selon une autre caractéristique, la source de lumière est une diode lumineuse.

L'invention a pour autre objet un dispositif d'éclairage et/ou de signalisation de l'agencement décrit ci-dessus.

L'invention a pour autre objet un véhicule automobile, caractérisé en ce qu'il comprend au moins un agencement tel que décrit ci-dessus.

D'autres caractéristiques et avantages de l'invention apparaîtront à l'examen de la description détaillée ci-après, et des dessins annexés sur lesquels :
- La figure 1, déjà décrite, est une vue générale d'un véhicule automobile de l'état de la technique montrant un agencement d'un dispositif de signalisation au niveau d'un pare-chocs avant ;
- La figure 2, déjà décrite, illustre schématiquement, dans une vue en coupe dans le plan XY, un dispositif d'éclairage et/ou de signalisation de l'état de la technique ;
- La figure 3 illustre une vue en coupe, dans le plan XY d'une LED, d'un mode de réalisation d'un dispositif d'éclairage et/ou de signalisation d'un agencement selon l'invention ; et
- La figure 4 illustre dans une vue en perspective, l'agencement selon l'invention.

Les termes « inférieur », « supérieur », « avant », « arrière », « longitudinal » et « transversal » s'entendront par rapport à l'orientation du véhicule considéré dans un référentiel standard XYZ généralement utilisé pour situer un véhicule dans l'espace.

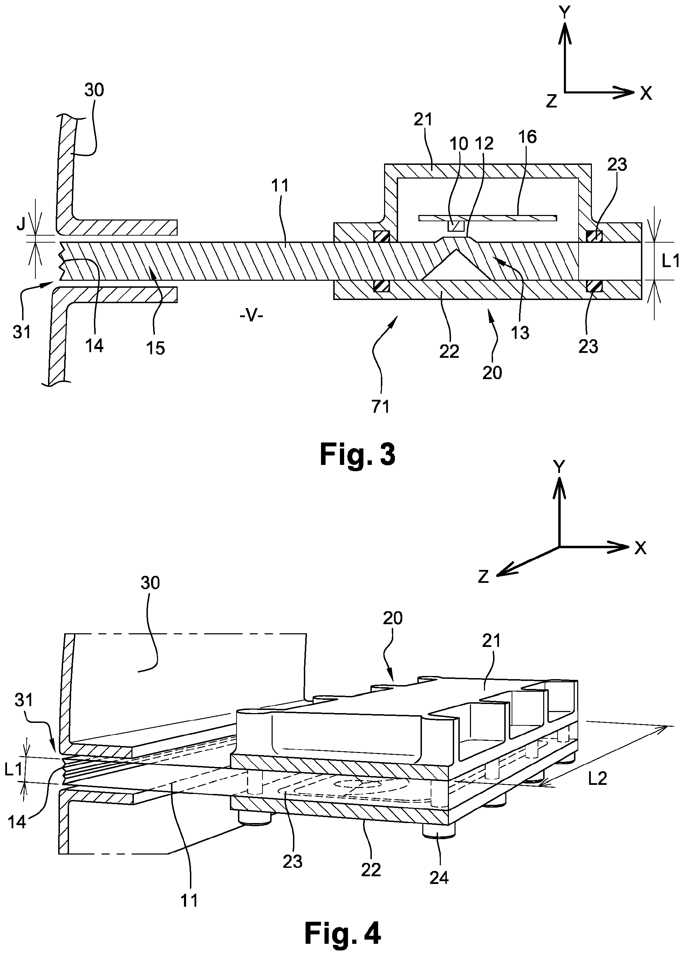

La figure 3 illustre un mode de réalisation d'un agencement selon l'invention dans lequel le dispositif d'éclairage et/ou de signalisation 71 est principalement constitué d'un guide de lumière 11 et d'une source de lumière 10 couplée optiquement au guide de lumière 11 par des moyens de collimation.

La source de lumière 10 peut être une diode lumineuse. Dans ce cas, la diode lumineuse peut être une diode électroluminescente ou LED (Light-Emitting Diode) ou une diode laser ou encore une structure de type OLED (Organic Light-Emitting Diode : LED organique).

La source de lumière 10 est supportée par une plaque de support 16. Cette plaque de support 16 peut, par exemple, être une carte à circuits imprimés, de type PCB (« Printed Circuit Board »), rigide ou flexible (« de type « Flex »).

Dans le mode de réalisation décrit, le guide de lumière 11 est un guide plat de type connu. Les propriétés de propagation de la lumière à l'intérieur d'un guide plat sont supposées être connues et ne seront donc pas redécrites.

Le guide de lumière 11 comprend une première partie d'extrémité 13 qui supporte, sur un côté du guide plat 11, au moins une face d'entrée 12, recevant la lumière générée par la source de lumière 10 et des moyens de collimation de la lumière. Le guide plat 11 comporte une deuxième partie d'extrémité 15, distante de la première partie d'extrémité 13, supportant au moins une face de sortie 14 de la lumière : la face de sortie 14 correspond la face externe du guide plat 11 (visible de l'extérieur du véhicule) qui est comprise entre les deux côtés du guide plat 11. La lumière entrant par la face d'entrée 12 du guide plat 11 est guidée à l'intérieur du guide plat 11 et ressort du guide plat 11 par la face de sortie 14 qui est conformée pour présenter des stries définissant des prismes optiques permettant d'éclater la lumière sur toute la surface ou surface d'illumination de la face de sortie de lumière 14.

La deuxième partie d'extrémité 15 du guide 11, supportant la face de sortie de lumière 14 et distante de la première partie 13, est contenue avec jeu dans une ouverture 31 qui été managée dans un élément de carrosserie 30 autrement désigné par peau de carrosserie ou de pare-chocs ou encore par bouclier. La surface d'illumination correspondant à la totalité de la face de sortie 14, remplit totalement, au jeu J près de l'ordre du millimètre de part et d'autre du guide plat 11, l'ouverture 31.

Un boitier 20 en deux parties, comportant un corps creux 21 et un couvercle 22, est rapporté de manière étanche sur les deux côtés de la première partie d'extrémité 13 du guide plat 11 : le corps creux 21 du boitier 20 encapsulant la carte PCB 16 supportant et alimentant la source de lumière 10 ainsi que l'électronique de commande de la source de lumière 10 ainsi que la face d'entrée de lumière 12.

Le boitier 20 vient prendre en sandwich l'épaisseur la première partie d'extrémité 13 du guide plat 11 entre le corps creux 21 et le couvercle 22. Le boitier 20 peut être par ailleurs être opaque à la lumière ce qui permet d'éviter toute fuite de lumière qui pourrait se propager vers la sortie du guide plat 11.

L'étanchéité entre le boitier 20 et le guide plat 11 est réalisée par exemple par des joints toriques 23 qui sont logés dans des gorges ménagées respectivement dans les bords périphériques du couvercle 22 et du corps creux 21. Les joints 23 sont écrasés par des moyens de fixation 24 au moment de la fixation du boitier 20 sur guide plat 11 comme illustré sur la vue en perspective de la figure 4.

Comparativement au dispositif d'éclairage et/ou de signalisation de l'état de la technique, l'étanchéité n'est plus réalisée à la jonction d'une glace transparente rajoutée sur l'ouverture du boitier pour protéger le guide de lumière et la source de lumière, mais elle réalisée localement directement sur une partie d'extrémité arrière d'un guide de lumière supportant la source de lumière et ses moyens de collimation (partie arrière qui est implanté derrière l'élément de carrosserie).

Un tel agencement permet d'adapter la largeur de l'ouverture 31 de l'élément de carrosserie 30 au plus juste (au jeu près), à la largeur L1 de la face de sortie 14 du guide plat 11. La surface d'illumination correspond totalement à la surface visible vue de l'extérieur de l'élément de carrosserie 30 donc du véhicule 1.

On notera que dans le mode de réalisation tel qu'illustré non limitativement sur les figures 3 et 4, le guide de lumière 11 est de type plat (en anglais « flat guide »). Mais il pourrait présenter au moins une courbure (et dans ce cas la source de lumière 10 est préférentiellement installée sur une carte à circuits imprimés flexible (ou « Flex »).

Le guide plat 11 peut être réalisé en polycarbonate (ou PC) ou en poly-méthacrylate de méthyle (ou PMMA).

Dans l'exemple considéré, le guide plat 11, de forme générale parallélépipédique, peut recevoir, sur son bord correspondant à la première partie d'extrémité 13 du guide 11, plusieurs sources de lumière 10, également réparties et alignées parallèlement au bord extérieur de la partie d'extrémité 13 du guide 11 de longueur L2.

Trois faces d'entrée de lumière 12 sont alors agencées sur un côté du guide plat 11 avec leurs moyens de collimation respectifs, en regard respectivement des trois sources de lumière 10.

Les trois sources de lumière 10 partagent une même carte de circuits imprimés 16 encapsulés dans un même boitier 20. Le boitier 20 est fixé au guide plat 11 par une pluralité de vis de fixation, par exemple huit vis, comme représenté sur la figure 4.

Le nombre de sources de lumière 10 et leur implantation sur le guide plat 11 sont choisis en fonction des dimensions de la surface de la face de sortie 14 du guide plat 11 pour une répartition homogène de la lumière sortant par la face de sortie 14 du guide 11 respectant la photométrie réglementaire de la fonction d'éclairage et/ou de signalisation restituée par le dispositif d'éclairage et/ou de signalisation selon l'invention.

## Revendications

1. Agencement pour véhicule automobile comprenant un élément de carrosserie (30) comportant au moins une ouverture (31) et au moins un dispositif d'éclairage et/ou de signalisation (71) implanté dans ladite ouverture (31), ledit dispositif d'éclairage et/ou de signalisation (71) comprenant au moins une source de lumière (10) et un guide de lumière (11), ladite source de lumière étant couplée optiquement au guide de lumière (11), **caractérisé en ce que** ledit guide de lumière (11) comprend une première partie d'extrémité (13) supportant au moins une face d'entrée (12) recevant la lumière générée par la source de lumière (10) et une deuxième partie d'extrémité (15), distante de la première partie d'extrémité (13), supportant au moins une face de sortie (14) de la lumière correspondant à la totalité de la surface d'illumination du dispositif d'éclairage et/ou de signalisation (71), ladite deuxième partie d'extrémité (15) du guide (11) étant comprise dans l'ouverture (31) de l'élément de carrosserie (30), et **en ce que** ledit dispositif d'éclairage et/ou de signalisation (71) comprend un boitier (20) rapporté de manière étanche sur la première partie d'extrémité (13) du guide de lumière (11) en encapsulant la source de lumière (10) et la face d'entrée de lumière (12).

2. Agencement selon la revendication précédente, **caractérisé en ce que** les dimensions de l'ouverture (31) ménagée dans l'élément de carrosserie (30) correspondent, au jeu (J) près, aux dimensions de la face de sortie (14) de la deuxième partie d'extrémité du guide de lumière (11) ; la surface d'illumination de la face de sortie de lumière (14) correspondant à la surface visible du dispositif d'éclairage et/ou de signalisation (71).

3. Agencement selon l'une des revendications précédentes, **caractérisé en ce que** le boitier (20) comporte un corps creux (21) rapporté de manière étanche sur la première partie d'extrémité (13) du guide de lumière (11) supportant la face d'entrée de lumière (12).

4. Agencement selon l'une des revendications précédentes, **caractérisé en ce que** ledit guide de lumière (11) est de type plat.

5. Agencement selon la revendication précédente, **caractérisé en ce que** le boitier (20) comporte en outre un couvercle (22) rapporté de manière étanche sur le côté du guide de lumière (11) qui est opposé au côté du guide (11) supportant la face d'entrée de lumière (12), en regard du corps creux (21).

6. Agencement selon la revendication précédente, **caractérisé en ce que** le corps creux (21) et le couvercle (22) sont fixés l'un à l'autre en prenant en sandwich le première partie d'extrémité (13) du guide plat (11).

7. Agencement selon la revendication précédente **caractérisé en ce qu'**un joint d'étanchéité est inséré entre les parties du corps creux (21) et du couvercle (22) qui sont respectivement en contact avec les côtés du guide plat (11).

8. Agencement selon l'une des revendications précédentes, **caractérisé en ce que** la source de lumière (10) est une diode lumineuse.

9. Dispositif d'éclairage et/ou de signalisation de l'agencement selon l'une des revendications précédentes.

10. Véhicule automobile, **caractérisé en ce qu'**il comprend au moins un agencement selon l'une des revendications 1 à 8.
